# EUROPEAN PATENT APPLICATION

(11) **EP 4 827 018 A1**
(43) Date of publication of application: **21.10.2026**
(21) Application number: 24916439.3
(22) Date of filing: 13.09.2024
(51) Int. Cl.: H04B 10/50

(54) **OPTICAL MODULE AND OPTICAL COMMUNICATION DEVICE**

(30) Priority: 09.01.2024 CN 202410038237
(71) Applicant: Huawei Technologies Co., Ltd., Shenzhen, Guangdong 518129 (CN)
(72) Inventor: ZHOU, Yaling, Shenzhen, Guangdong 518129 (CN); DONG, Hao, Shenzhen, Guangdong 518129 (CN); GAO, Fei, Shenzhen, Guangdong 518129 (CN); ZHANG, Pengbo, Shenzhen, Guangdong 518129 (CN); LI, Yangjie, Shenzhen, Guangdong 518129 (CN); YANG, Shiwen, Shenzhen, Guangdong 518129 (CN)
(74) Representative: Huawei European IPR
(86) International application number: PCT/CN2024/118875
(87) International publication number: WO 2025/148387

(57) **Abstract**

This application provides an optical module and an optical communication device. The optical module includes a first optical transmitter, a second optical transmitter, a polarization beam combiner, and an interface. The first optical transmitter is configured to emit first signal light that propagates in a first direction, and a polarization state of the first signal light is a first polarization state. The second optical transmitter is configured to emit second signal light that propagates in a second direction, and a polarization state of the second signal light is a second polarization state. The polarization beam combiner is configured to: receive the first signal light and the second signal light, combine the first signal light and the second signal light into mixed light, and emit the mixed light to the interface. Based on a wavelength division multiplexing solution of a current passive optical network, a polarization coupling solution is used to combine two optical transmitters into one path. This ensures isolation between signal light in the current multi-transmitter solution, reduces complexity of an internal optical path, and implements a multi-transmitter optical module solution with high transmission quality, low crosstalk, and high integration.

## Description

This application claims priority to Chinese Patent Application No. 202410038237.2, filed with the China National Intellectual Property Administration on January 9, 2024 and entitled "OPTICAL MODULE AND OPTICAL COMMUNICATION DEVICE".

### TECHNICAL FIELD

This application relates to the field of optical communication, and in particular, to an optical module and an optical communication device.

### BACKGROUND

In the context of FTTx, with the rapid development of high-bandwidth access services, the current mainstream PON cannot adequately meet service requirements. As technological evolutions of the PON, a gigabit-capable passive optical network G-PON, a gigabit-capable asymmetric passive optical network XG-PON, and a gigabit-capable symmetric passive optical network XGS-PON further improve service transmission rates. In addition to the foregoing network solutions, a hybrid passive optical network Combo PON is a passive optical network that supports various PON protocols. The Combo PON can perform built-in combining of solutions such as the G-PON, the XG-PON, and the XGS-PON, and support multi-rate modal coexistence, thereby facilitating a smooth upgrade to a higher-speed optical network. However, in a current broadband optical access network system, wavelength division multiplexing and combining solutions are mostly used. As a result, in an optical line terminal, an optical network unit, and an optical network terminal, if wavelengths of internally multiplexed optical signals are similar, problems such as light convergence and signal crosstalk tend to occur. In addition, when a plurality of optical transmitters and an optical receiver are integrated together, arrangement of optical coupling paths for a plurality of optical signals results in problems such as a large size, high costs, and inconvenient use of an optical device.

### SUMMARY

This application provides an optical module and an optical communication device. Based on a wavelength division multiplexing solution of a passive optical network, a polarization coupling solution is added, to implement a multi-transmitter optical device solution with low crosstalk, high reliability, and a small size.

According to a first aspect, an optical module is provided, including a first optical transmitter, a second optical transmitter, a polarization beam combiner, and an interface. The first optical transmitter is configured to emit first signal light that propagates in a first direction, and a polarization state of the first signal light is a first polarization state. The second optical transmitter is configured to emit second signal light that propagates in a second direction, a polarization state of the second signal light is a second polarization state, and the first direction is not parallel to the second direction. The polarization beam combiner is configured to: receive the first signal light and the second signal light, combine the first signal light and the second signal light into mixed light, and emit the mixed light to the interface. The interface is configured to connect to an optical transmission medium.

Based on a wavelength division multiplexing solution of a current passive optical network, a polarization coupling solution is used to combine two optical transmitters into one path. This ensures isolation between signal light in the current multi-transmitter solution, reduces complexity of an internal optical path, and implements a multi-transmitter optical module solution with high transmission quality, low crosstalk, and high integration.

With reference to the first aspect, in some implementations of the first aspect, the first signal light and the second signal light have different wavelengths and/or rates. In some implementations, on a basis that the polarization states of the first signal light and the second signal light are different, the wavelengths of the first signal light and the second signal light are different, so that when the optical module is applied to a passive optical network, compatibility between the optical module and an existing wavelength division multiplexing mode is ensured. In some implementations, on a basis that the polarization states of the first signal light and the second signal light are different, the rates of the first signal light and the second signal light are different. Therefore, the optical module may be applicable to a multi-rate modal coexistence solution, and is compatible with more optical network solutions.

With reference to the first aspect, in some implementations of the first aspect, a wavelength spacing between the first signal light and the second signal light is less than 40 nm. With such a wavelength spacing, the signal light emitted by the first optical transmitter and the converged signal light emitted by the second optical transmitter experience a loss after being combined, and a more complex optical path structure needs to be used. However, polarization multiplexing can simplify an optical path and reduce an overall size of the optical module.

With reference to the first aspect, in some implementations of the first aspect, the polarization beam combiner includes a first light entrance surface, a second light entrance surface, and a light exit surface. The first light entrance surface is configured to receive the first signal light, the second light entrance surface is configured to receive the second signal light, and the light exit surface is configured to emit the mixed light. The first light entrance surface is parallel to or coincides with the light exit surface, or the second light entrance surface is parallel to or coincides with the light exit surface. In this way, an optical loss caused by polarization combining is reduced, and optical path complexity in the optical module is simplified. In addition, use of a polarizer can reduce overall costs of the optical module, and facilitate arrangement of the polarization beam combiner in the optical module.

With reference to the first aspect, in some implementations of the first aspect, the polarization beam combiner is a polarizer, and the polarizer is configured to transmit the first signal light. In addition, the polarizer is further configured to reflect the second signal light.

With reference to the first aspect, in some implementations of the first aspect, an optical receiver and a wavelength division multiplexer are further included. The optical transmission medium is configured to transmit third signal light, and the interface is configured to emit the third signal light. The wavelength division multiplexer is configured to: receive the third signal light, perform wavelength division processing on the third signal light, and emit fourth signal light of a first wavelength in the third signal light. The optical receiver is configured to: receive the fourth signal light, and convert the fourth signal light into an electrical signal. The polarization coupling solution is used for signal light sent by an optical transmitter, and the wavelength division multiplexing solution is used for signal light received by an optical receiver, thereby reducing complexity of an internal optical path.

With reference to the first aspect, in some implementations of the first aspect, the wavelength division multiplexer emits the fourth signal light in a third direction, and any two of the first direction, the second direction, and the third direction are not parallel. That is, ports for sending or receiving signal light are respectively located in three different dimensions. Compared with an optical module in which a plurality of ports are disposed in a same two-dimensional plane, this reduces a device size and makes full use of device space.

With reference to the first aspect, in some implementations of the first aspect, the optical receiver is in a dual-receiver form.

With reference to the first aspect, in some implementations of the first aspect, a housing is further included. The housing is a polyhedron including a plurality of planes, and the first optical transmitter, the second optical transmitter, and the optical receiver are respectively located on different planes of the plurality of planes. In this way, space of different dimensions of the housing is fully utilized, and device integration is improved.

With reference to the first aspect, in some implementations of the first aspect, the housing is a cube or a cuboid. In a current two-dimensional optical module solution, devices such as an optical transmitter and an optical receiver need to be connected to a board by using a flexible printed circuit connector, which is not conducive to installation and integration of the optical module. However, in the three-dimensional optical module solution of this application, a connector may not be required, which facilitates on-board installation of the optical module.

According to a second aspect, an optical communication device is provided, including N boards. A board of the N boards includes at least one optical module according to the first aspect and any possible implementation of the first aspect.

### BRIEF DESCRIPTION OF DRAWINGS

FIG. 1A to FIG. 1C are diagrams of an internal structure of an optical module according to an embodiment of this application;
FIG. 2A and FIG. 2B are diagrams of an internal structure of another optical module according to an embodiment of this application;
FIG. 3 is a diagram of an internal structure of an optical receiver in a dual-receiver form according to an embodiment of this application;
FIG. 4A and FIG. 4B are diagrams of an overall structure of an optical module according to an embodiment of this application;
FIG. 5A and FIG. 5B show an optical communication device according to an embodiment of this application; and
FIG. 6 is a diagram of a networking structure of an optical network according to an embodiment of this application.

### DESCRIPTION OF EMBODIMENTS

The following describes technical solutions of this application with reference to accompanying drawings.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In the descriptions of embodiments of this application, orientations or position relationships indicated by terms "up", "down", "vertical", "horizontal", and the like are defined relative to orientations or positions in which parts are schematically placed in the accompanying drawings. It should be understood that these directional terms are relative concepts, and are used for relative description and clarification, but do not indicate or imply that a specified apparatus or component needs to have a specific orientation or be constructed and operated in a specific orientation. These directional terms may vary correspondingly based on changes of positions of the parts in the accompanying drawings, and therefore cannot be understood as a limitation on this application.

In the following embodiments of this application, the terms such as "include", "have", and any variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.

A passive optical network (passive optical network, PON) is an access network technology, which usually includes an optical line terminal (optical line terminal, OLT), an optical distribution network (optical distribution network, ODN), and an optical network unit (optical network unit, ONU). The optical line terminal is connected to a plurality of optical network units in a point-to-multipoint manner through the passive optical distribution network. The passive optical network system is a communication network that does not need any active device to implement data distribution between the optical line terminal and the optical network unit, and the data distribution between the optical line terminal and the optical network unit may be implemented through a passive optical device (for example, a beam splitter) in the optical distribution network. For example, communication between the optical line terminal and the optical network unit may be achieved via a time division multiplexing (time division multiplexing, TDM) mechanism, a wavelength division multiplexing (wavelength division multiplexing, WDM) mechanism, or a TDM/WDM hybrid mechanism.

FTTx is a collective term for various application types of broadband optical access networks. The "x" has a plurality of variants, which may include fiber to the building (fiber to the building, FTTB), fiber to the curb (fiber to the curb, FTTC), fiber to the home (fiber to the home, FTTH), fiber to the room (fiber to the room, FTTR), and the like. The FTTx technology ranges from a central office device in a regional telecommunications central office to a user terminal device, including an optical line terminal, an optical network unit, and an optical network terminal (optical network terminal, ONT).

The FTTH technology has been developed for nearly twenty years. Currently, except for some old communities, most households access FTTH broadband. In recent years, home broadband speeds have continued to increase, 500M/1000M broadband has been widely used, and trials of 2000M broadband have also begun. At the same time, operators have begun to promote "FTTR broadband". Based on FTTH, FTTR further extends optical fibers to each room through relay of a primary optical modem. Then, an optical router is installed in any room as needed, thereby transforming an indoor network with incomplete Ethernet coverage into a fully covered all-fiber network. FTTR has outstanding advantages, the first of which is higher upload and download speeds. Most households use Category 5 network cables, which only support speeds up to 100 Mbps, but optical fibers can support wired speeds up to 10 Gbps. When paired with the latest Wi-Fi 6 router, the entire home local area network can achieve "10 Gbps wired + 1 Gbps wireless" internet speeds. This is a qualitative improvement over the previous "100 Mbps wired + 100 Mbps wireless" setup. In other words, each room is equipped with high-speed wired network access. When paired with the optical router, this may achieve full wired and wireless high-speed network coverage. In addition, a plurality of optical routes can improve a network access capability, thereby providing a better user experience for smart homes.

In the context of FTTx, with the rapid development of high-bandwidth access services, the current mainstream PON cannot adequately meet service requirements. As technological evolutions of the PON, a gigabit-capable passive optical network G-PON, a gigabit-capable asymmetric passive optical network XG-PON, and a gigabit-capable symmetric passive optical network XGS-PON further improve service transmission rates. In addition to the foregoing network solutions, a hybrid passive optical network Combo PON is a passive optical network that supports various PON protocols. The Combo PON can perform built-in combining of solutions such as the G-PON, the XG-PON, and the XGS-PON, and support multi-rate modal coexistence, thereby facilitating a smooth upgrade to a higher-speed optical network. However, in a current broadband optical access network system, wavelength division multiplexing and combining solutions are mostly used. As a result, in an optical line terminal, an optical network unit, and an optical network terminal, if wavelengths of internally multiplexed optical signals are similar, problems such as light convergence and signal crosstalk tend to occur. In addition, when a plurality of optical transmitters and an optical receiver are integrated together, arrangement of optical coupling paths for a plurality of optical signals results in problems such as a large size, high costs, and inconvenient use of an optical device.

In view of this, this application provides an optical module and an optical communication device. Based on a wavelength division multiplexing solution of a passive optical network, a polarization coupling solution is added, to implement a multi-transmitter optical device solution with low crosstalk, high reliability, and a small size.

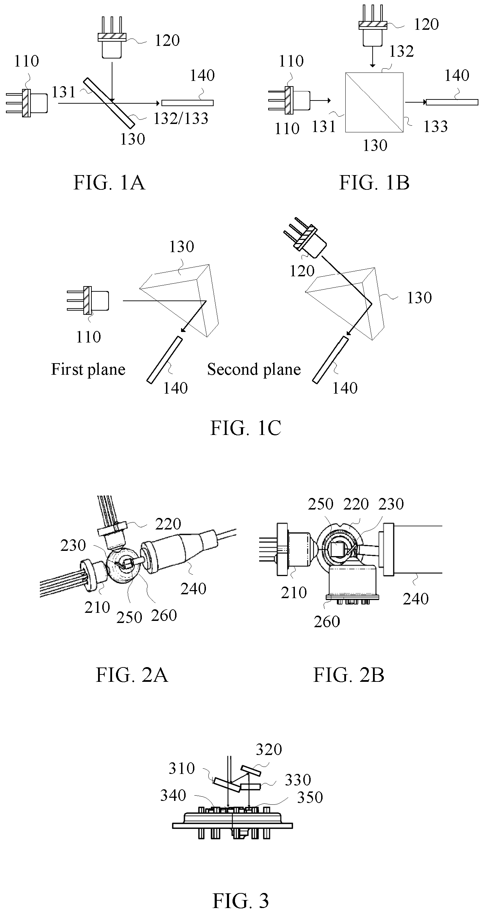

FIG. 1A to FIG. 1C are diagrams of an internal structure of an optical module according to an embodiment of this application. As shown in FIG. 1A to FIG. 1C, the optical module includes a first optical transmitter 110, a second optical transmitter 120, a polarization beam combiner 130, and an interface 140.

The first optical transmitter 110 is configured to emit first signal light that propagates in a first direction, and a polarization state of the first signal light is a first polarization state. The second optical transmitter 120 is configured to emit second signal light that propagates in a second direction, and a polarization state of the second signal light is a second polarization state. The first polarization state is different from the second polarization state.

Optical transmitters in the first optical transmitter 110 and the second optical transmitter 120 may specifically include an optical chip, and the optical chip intercepts with an electronic chip. The electronic chip is configured to generate an electrical signal based on data, and the optical chip is configured to generate corresponding signal light based on the electrical signal. The optical chip is configured to emit signal light with a polarization state.

There may be a spacing between any two of the first optical transmitter 110, the second optical transmitter 120, the polarization beam combiner 130, and the interface 140. The first optical transmitter 110 and the polarization beam combiner 130 are spaced apart in the first direction. The second optical transmitter 120 and the polarization beam combiner 130 are spaced apart in the second direction. The first direction is not parallel to the second direction. In some implementations, as shown in FIG. 1A and FIG. 1B, the first direction and the second direction are located in a same plane. That is, a direction of signal light emitted by the first optical transmitter 110 and a direction of signal light emitted by the second optical transmitter 120 are located in a same plane. In some implementations, as shown in FIG. 1C, the first direction and the second direction are located in different planes. Signal light emitted by the first optical transmitter 110 is located in a first plane, signal light emitted by the second optical transmitter 120 is located in a second plane, and the first plane intersects or is perpendicular to the second plane.

In some implementations, on a basis that the polarization states of the first signal light and the second signal light are different, the wavelengths of the first signal light and the second signal light are different, so that when the optical module is applied to a passive optical network, compatibility between the optical module and an existing wavelength division multiplexing mode is ensured. In some implementations, a wavelength spacing between the first signal light and the second signal light is less than 40 nm. With such a wavelength spacing, the signal light emitted by the first optical transmitter 110 and the converged signal light emitted by the second optical transmitter 120 experience a loss after being combined, and a more complex optical path structure needs to be used. However, polarization multiplexing can simplify an optical path and reduce an overall size of the optical module.

In some implementations, on a basis that the polarization states of the first signal light and the second signal light are different, the rates of the first signal light and the second signal light are different. Therefore, the optical module may be applicable to a multi-rate modal coexistence solution, and is compatible with more optical network solutions.

The polarization beam combiner 130 is configured to: receive the first signal light and the second signal light, combine the first signal light and the second signal light into mixed light, and emit the mixed light to the interface 140. The polarization beam combiner 130 may be optical glass, and a specific form of the polarization beam combiner 130 is determined based on an actual situation. In addition, the polarization beam combiner may also be understood as a polarization beam splitter, a polarization combiner/splitter, a polarization filter, or the like based on a specific scenario. This is not limited in this application.

In some implementations, as shown in FIG. 1A, the polarization beam combiner 130 is in a form of a polarizer. For example, the polarizer may be specifically a dichroic polarizer, a thin-film polarizer, a glass sheet coated with a dielectric coating, or the like, and is determined based on an actual situation. The polarizer may include a first light entrance surface 131, a second light entrance surface 132, and a light exit surface 133. The first light entrance surface 131 is configured to receive the first signal light, the second light entrance surface 132 is configured to receive the second signal light, and the light exit surface 132 is configured to emit the mixed light. The first light entrance surface 131 is parallel to the light exit surface 133, and the second light entrance surface 132 coincides with the light exit surface 133. The polarizer may be specifically configured to transmit the first signal light. In addition, the polarizer is further configured to reflect the second signal light. That is, an incident direction of the first signal light on the polarization beam splitter 130 is the same as an emergent direction of the mixed light on the light exit surface 133. In this way, an optical loss caused by polarization combining is reduced, and optical path complexity in the optical module is simplified. In addition, use of the polarizer can reduce overall costs of the optical module, and facilitate arrangement of the polarization beam combiner in the optical module. In some implementations, an incident angle of the first signal light or the second signal light when the first signal light or the second signal light is incident to the polarizer is less than 50 degrees, thereby achieving polarization beam combination of the first signal light and the second signal light, and outputting the mixed light to the interface. In some implementations, the incident angle is 45 degrees.

In some implementations, as shown in FIG. 1B or FIG. 1C, the polarization beam combiner 130 is in a form of a prism. For example, the polarization beam combiner 130 may be specifically a Wollaston (Wollaston) prism, a Glan Thompson (Glan Thompson) prism, a Glan-Foucault (Glan-Foucault) prism, a Glan Taylor (Glan Taylor) prism, or the like, and is determined based on an actual situation. In addition, the polarization beam combiner 130 may alternatively be a combination of a plurality of prisms, and prisms among the plurality of prisms may be in close contact with each other or spaced apart from each other. This is not limited in this application. The prism may include a first light entrance surface 131, a second light entrance surface 132, and a light exit surface 133. The first light entrance surface 131 is configured to receive the first signal light, the second light entrance surface 132 is configured to receive the second signal light, and the light exit surface 132 is configured to emit the mixed light.

The first light entrance surface 131 and the light exit surface 133 may be parallel. That is, an incident direction of the first signal light on the polarization beam splitter 130 is the same as an emergent direction of the mixed light on the light exit surface 133. In this way, an optical loss caused by polarization combining is reduced, and optical path complexity in the optical module is simplified. In some implementations, an angle of the polarization prism is less than 50 degrees, thereby achieving polarization beam combination of the first signal light and the second signal light, and outputting the mixed light to the interface. In some implementations, the angle of the polarization prism is 45 degrees.

The interface 140 is configured to connect to an optical transmission medium. The optical transmission medium may be an optical fiber. Specifically, the interface 140 is connected to a pigtail of a single fiber.

In the optical module shown in FIG. 1A to FIG. 1C, based on a wavelength division multiplexing solution of a current passive optical network, a polarization coupling solution is used to combine two optical transmitters into one path. This ensures isolation between signal light in the current multi-transmitter solution, reduces complexity of an internal optical path, and implements a multi-transmitter optical module solution with high transmission quality, low crosstalk, and high integration.

FIG. 2A and FIG. 2B are diagrams of an internal structure of another optical module according to an embodiment of this application. FIG. 2A and FIG. 2B respectively show three-dimensional optical paths in the optical module at two different angles. The optical module includes a first optical transmitter 210, a second optical transmitter 220, a polarization beam combiner 230, an interface 240, a wavelength division multiplexer 250, and an optical receiver 260. The first optical transmitter 210, the second optical transmitter 220, and the polarization beam combiner 230 are similar to those in FIG. 1A to FIG. 1C. Details are not described herein again.

An optical transmission medium connected to the interface 240 is configured to transmit third signal light, and the interface 240 is configured to emit the third signal light.

The wavelength division multiplexer 250 is configured to: receive the third signal light, perform wavelength division processing on the third signal light, and emit fourth signal light of a first wavelength in the third signal light. The wavelength division multiplexer 250 may also be understood as an optical filter, a filter, a dichroic mirror, a color splitting prism, or the like based on a specific scenario, and is determined based on an actual situation.

The optical receiver 260 is configured to: receive the fourth signal light, and convert the fourth signal light into an electrical signal. Specifically, the optical receiver 260 may include an optical receiving chip and a signal processing chip. The optical receiving chip is configured to convert the fourth signal light into the electrical signal, and the signal processing chip is configured to process data carried in the electrical signal obtained by conversion.

The wavelength division multiplexer 250 may emit the fourth signal light in a third direction, and any two of the first direction, the second direction, and the third direction are not parallel. That is, ports for sending or receiving signal light are respectively located in three different dimensions. Compared with an optical module in which a plurality of ports are disposed in a same two-dimensional plane, this reduces a device size and makes full use of device space.

In some implementations, the optical receiver 260 is in a dual-receiver form. That is, the optical module has two receiving optical paths and two sending optical paths.

In the optical module shown in FIG. 2A and FIG. 2B, the polarization coupling solution is used for signal light sent by an optical transmitter, and the wavelength division multiplexing solution is used for signal light received by an optical receiver, thereby reducing complexity of an internal optical path.

FIG. 3 is a diagram of an internal structure of an optical receiver in a dual-receiver form according to an embodiment of this application. As shown in FIG. 3, the optical receiver includes a first optical filter 310, a second optical filter 320, a third optical filter 330, a first optical receiving chip 340, and a second optical receiving chip 350.

The first optical filter 310 may be configured to: after receiving fourth signal light, split the fourth signal light into fifth signal light of a second wavelength and sixth signal light of a third wavelength, transmit the fifth signal light to the first optical receiving chip 340, and transmit the sixth signal light to the second optical filter 320. After receiving the sixth signal light, the second optical filter reflects the sixth signal light to the third optical filter 330. The third optical filter 330 filters the sixth signal light to obtain seventh signal light of a fourth wavelength in the sixth signal light, and transmits the seventh signal light to the second optical receiving chip 350. After receiving the fifth signal light, the first optical receiving chip 340 may convert the fifth signal light into a corresponding electrical signal. After receiving the seventh signal light, the second optical receiving chip 350 may convert the seventh signal light into a corresponding electrical signal.

In a case shown in FIG. 3, the first optical filter 310 and the first optical receiving chip 340 may be spaced apart along a first transmission path, and the second optical filter 320, the third optical filter 330, and the second optical receiving chip may be spaced apart along a second transmission path. The first transmission path may be parallel to the second transmission path.

In addition, the first optical receiving chip 340 and the second optical receiving chip 350 may not be located on a same horizontal plane. For example, heights of the first optical receiving chip 340 and the second optical receiving chip 350 may be adjusted by using a pillar, a groove, a bump, or the like. In addition, the optical receiver may include a sub-package structure, and the sub-package structure is configured to accommodate the first optical receiving chip 340 or the second optical receiving chip 350.

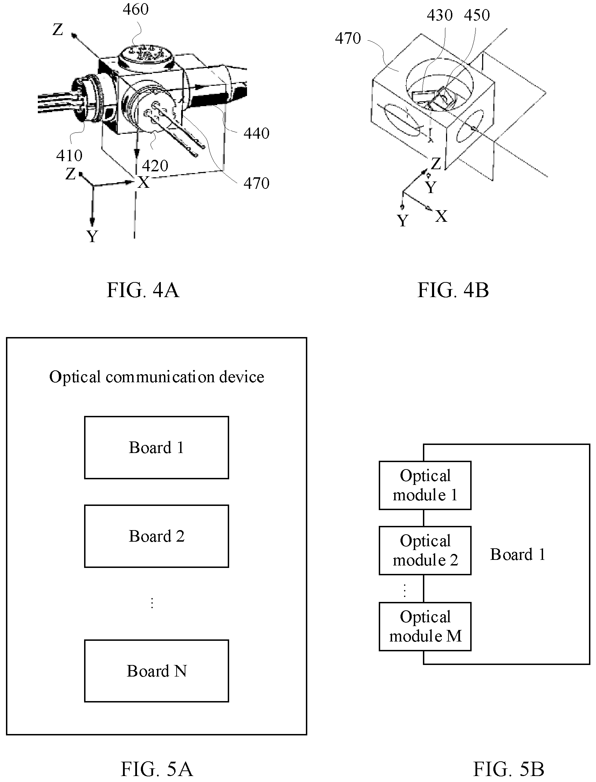

FIG. 4A and FIG. 4B are diagrams of an overall structure of an optical module according to an embodiment of this application. As shown in FIG. 4A and FIG. 4B, the optical module includes a first optical transmitter 410, a second optical transmitter 420, a polarization beam combiner 430, an interface 440, a wavelength division multiplexer 450, an optical receiver 460, and a housing 470. The first optical transmitter 410, the second optical transmitter 420, the polarization beam combiner 430, the interface 440, the wavelength division multiplexer 450, and the optical receiver 460 are similar to those described in FIG. 1A to FIG. 1C or FIG. 2A and FIG. 2B. Details are not described herein again.

The housing 470 is configured to assemble elements such as the first optical transmitter 410, the second optical transmitter 420, the interface 440, and the optical receiver 460. The housing 470 is a polyhedron including a plurality of planes, and the first optical transmitter 410, the second optical transmitter 420, and the interface 440 are respectively located on different planes of the plurality of planes. When the optical module includes the optical receiver 460, the optical receiver 460 is also located on a different plane of the plurality of planes. In this way, space of different dimensions of the housing is fully utilized, and device integration is improved. In some implementations, the housing 470 is a cube or a cuboid. In a current two-dimensional optical module solution, devices such as an optical transmitter and an optical receiver need to be connected to a board by using a flexible printed circuit connector, which is not conducive to installation and integration of the optical module. However, in the three-dimensional optical module solution of this application, a connector may not be required, which facilitates on-board installation of the optical module.

In a specific implementation solution, as shown in FIG. 4A, the first optical transmitter 410 is located on a YZ plane of the housing 470, and first signal light emitted by the first optical transmitter 410 is directed toward an X-axis. The second optical transmitter 420 is located on an XY plane of the housing 470, and second signal light emitted by the second optical transmitter 420 is directed toward a Z-axis. The optical receiver 460 is located on an XZ plane of the housing 470, and third signal light received by the optical receiver is directed toward a Y-axis direction. FIG. 4B shows a mounting status of internal devices in a structure of the housing 470. An included angle between the polarization beam combiner 430 and the X-axis is 45 degrees, and an included angle between the polarization beam combiner 430 and the Z-axis is 45 degrees. An included angle between the wavelength division multiplexer 450 and the X-axis is 45 degrees, and an included angle between the wavelength division multiplexer 450 and the Y-axis is 45 degrees. Specific locations of the polarization beam combiner 430 and the wavelength division multiplexer 450 are determined based on an actual situation. This is not limited in this application.

It should be understood that, in the optical devices shown in FIG. 1A to FIG. 1C to FIG. 4A and FIG. 4B, the optical transmitter and the optical receiver in a coaxial package with a transistor outline (transistor outline, TO) are used as an example. In addition, the optical transmitter and the optical receiver may be specifically in another form. This is not limited in this application. It should be understood that the foregoing figures show only key devices in the optical module. In addition, a cooler, a heat sink, or the like may be further disposed inside the optical module, as determined based on an actual installation process of the optical module. Along an internal optical path of the optical module, for example, in a central region of the housing or between a plurality of optical transmitters and an optical receiver, a collimating lens, a reflection mirror, an isolator, or the like may be further disposed, as determined by an actual optical path.

In addition, the optical devices shown in FIG. 1A to FIG. 1C to FIG. 4A and FIG. 4B illustrate only a case in which optical transmitters and an optical receiver are disposed on three planes of the optical module. When the housing specifically includes more than four planes, the polarization coupling solution provided in this application may also be used to dispose an optical transmitter on another surface of the housing. In addition, the wavelength division multiplexing solution provided in this application may also be used to dispose an optical receiver on another surface of the housing. In addition, any one of the foregoing optical transmitters may be specifically in a single-transmitter form or a multi-transmitter form, and any one of the foregoing optical receivers may be specifically in a single-receiver form or a multi-receiver form, as determined based on an actual optical module design.

In addition, an embodiment of this application further provides an optical communication device. As shown in FIG. 5A and FIG. 5B, the optical communication device includes N boards, for example, a board 1, a board 2, ..., and a board N shown in FIG. 5A. Each of the N boards includes one or more optical modules described in the foregoing accompanying drawings. For example, as shown in FIG. 5B, the board 1 specifically includes an optical module 1, an optical module 2, ..., and an optical module M. Each optical module includes the optical module described in the foregoing accompanying drawings. A specific form of the optical communication device may be an optical transmission device, an optical access device, an optical switching device, an optical modem, or the like, and is determined based on an actual situation. When applied to a passive optical network, the optical communication device may be an optical line terminal, an optical distribution network, an optical network unit, an optical network terminal, or the like.

In some implementations, the optical module is disposed in an optical network unit in an FTTR networking structure, and the optical network unit may also be understood as a primary optical modem or a primary router in the networking structure. In the FTTR networking structure, if combining of, for example, GPON and 10GPON is performed at the optical line terminal, supporting devices such as an OLT chassis and a rack need to be added. This occupies a large amount of space in an equipment room and is inconvenient for management and maintenance. However, by adopting a Combo PON solution with an integrated optical module at the optical network unit, and performing combining of signal lights of a plurality of rates and wavelengths in a single optical module, the original device chassis can be reused. This simplifies network upgrade, facilitates maintenance, and achieves a smooth upgrade to a higher-speed optical network.

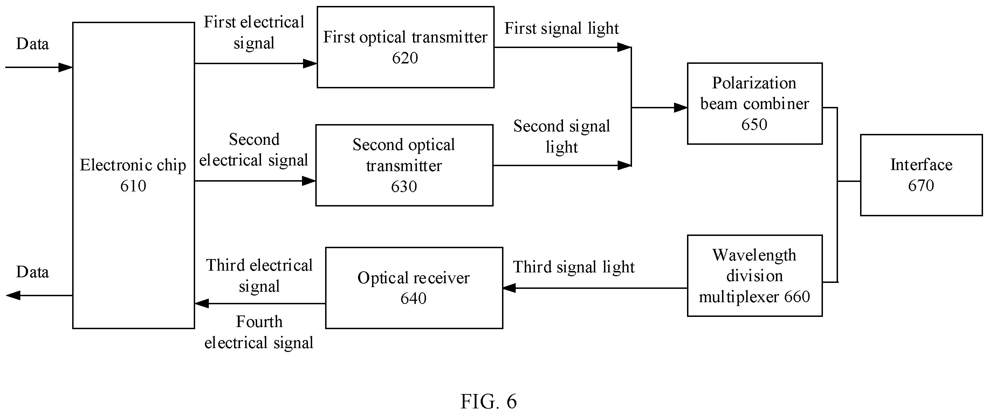

FIG. 6 is a diagram of a networking structure of an optical network according to an embodiment of this application. An optical module and an optical communication device that are provided in this embodiment of this application may be applicable to a Combo PON.

In a networking structure, an electronic chip 610 is configured to generate a first electrical signal based on data, and a rate of the first electrical signal may be 10 G or 2.5 G. An optical chip in a first optical transmitter 620 is configured to convert the first electrical signal into first signal light, and a wavelength of the first signal light is 1270±10 nm. The electronic chip 610 is further configured to generate a second electrical signal based on the data, and a rate of the second electrical signal may be 1.25 G. An optical chip in a second optical transmitter 630 is configured to convert the second electrical signal into second signal light, and a wavelength of the second signal light is 1310±20 nm. A polarization beam combiner 650 is configured to: combine the first signal light and the second signal light into mixed light, and send the mixed light to an interface 670. The interface 670 is further configured to send third signal light transmitted in an optical fiber to a wavelength division multiplexer 660, the wavelength division multiplexer 660 separates fourth signal light in the third signal light from other signal light, and wavelengths of the fourth signal light are 1490 nm and 1577 nm. The fourth signal light is received by an optical receiver 640. A first optical receiving chip in the optical receiver 640 is configured to: process fifth signal light with the wavelength of 1490 nm, and convert the fifth signal light into a third electrical signal. A second optical receiving chip in the optical receiver 640 is configured to: process seventh signal light with the wavelength of 1577 nm, and convert the seventh signal light into a fourth electrical signal. The electronic chip 610 is further configured to convert the third electrical signal and the fourth electrical signal into corresponding data.

In another networking structure, an electronic chip 610 is configured to generate a first electrical signal based on data, and a rate of the first electrical signal may be 50 G or 25 G. An optical chip in a first optical transmitter 620 is configured to convert the first electrical signal into first signal light, and a wavelength of the first signal light ranges from 1284 nm to 1288 nm. The electronic chip 610 is further configured to generate a second electrical signal based on the data, and a rate of the second electrical signal may be 10 G. An optical chip in a second optical transmitter 630 is configured to convert the second electrical signal into second signal light, and a wavelength of the second signal light ranges from 1260 nm to 1280 nm. A polarization beam combiner 650 is configured to: combine the first signal light and the second signal light into mixed light, and send the mixed light to an interface 670. The interface 670 is further configured to send third signal light transmitted in an optical fiber to a wavelength division multiplexer 660, the wavelength division multiplexer 660 separates fourth signal light in the third signal light from other signal light, and wavelengths of the fourth signal light range from 1340 nm to 1344 nm and from 1575 nm to 1580 nm. The fourth signal light is received by an optical receiver 640. A first optical receiving chip in the optical receiver 640 is configured to: process fifth signal light with the wavelength ranging from 1340 nm to 1344 nm, and convert the fifth signal light into a third electrical signal with a rate of 50 G. A second optical receiving chip in the optical receiver 640 is configured to: process seventh signal light with the wavelength ranging from 1575 nm to 1580 nm, and convert the seventh signal light into a fourth electrical signal with a rate of 25 G. The electronic chip 610 is further configured to convert the third electrical signal and the fourth electrical signal into corresponding data.

In addition, the optical module and the optical communication device provided in this embodiment of this application may also be applied to another passive optical network, for example, a next-generation PON (next-generation PON, NG-PON), an NG-PON 1, an NG-PON 2, a 10 gigabit per second PON (10 gigabit per second PON, XG-PON), a 10-gigabit-capable symmetric passive optical network (10-gigabit-capable symmetric passive optical network, XGS-PON), an Ethernet PON (Ethernet PON, EPON), a 10 gigabit per second EPON (10 gigabit per second EPON, 10G-EPON), a next-generation EPON (next-generation EPON, NG-EPON), a wavelength-division multiplexing (wavelength-division multiplexing, WDM) PON, time- and wavelength-division multiplexing (time- and wavelength-division multiplexing, TWDM) PON, a point-to-point (point-to-point, P2P) WDM PON (P2P-WDM PON), an asynchronous transfer mode PON (asynchronous transfer mode PON, APON), a broadband PON (broadband PON, BPON), and the like, and a 25 gigabit per second PON (25 gigabit per second PON, 25G-PON), a 50 gigabit per second PON (50 gigabit per second PON, 50G-PON), a 100 gigabit per second PON (100 gigabit per second PON, 100G-PON), a 25 gigabit per second EPON (25 gigabit per second EPON, 25G-EPON), a 50 gigabit per second EPON (50 gigabit per second EPON, 50G-EPON), a 100 gigabit per second EPON (100 gigabit per second EPON, 100G-EPON), a GPON with another rate, and an EPON with another rate.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical module, comprising a first optical transmitter, a second optical transmitter, a polarization beam combiner, and an interface, wherein
the first optical transmitter is configured to emit first signal light that propagates in a first direction, wherein a polarization state of the first signal light is a first polarization state;
the second optical transmitter is configured to emit second signal light that propagates in a second direction, wherein a polarization state of the second signal light is a second polarization state, and the first direction is not parallel to the second direction;
the polarization beam combiner is configured to: receive the first signal light and the second signal light, combine the first signal light and the second signal light into mixed light, and emit the mixed light to the interface; and
the interface is configured to connect to an optical transmission medium.

2. The optical module according to claim 1, wherein the first signal light and the second signal light have different wavelengths and/or rates.

3. The optical module according to claim 1 or 2, wherein a wavelength spacing between the first signal light and the second signal light is less than 40 nm.

4. The optical module according to any one of claims 1 to 3, wherein
the polarization beam combiner comprises a first light entrance surface, a second light entrance surface, and a light exit surface, wherein the first light entrance surface is configured to receive the first signal light, the second light entrance surface is configured to receive the second signal light, and the light exit surface is configured to emit the mixed light; and
the first light entrance surface is parallel to or coincides with the light exit surface, or the second light entrance surface is parallel to or coincides with the light exit surface.

5. The optical module according to claim 4, wherein the polarization beam combiner is a polarizer, the polarizer is configured to transmit the first signal light, and the polarizer is further configured to reflect the second signal light.

6. The optical module according to any one of claims 1 to 5, further comprising an optical receiver and a wavelength division multiplexer, wherein
the optical transmission medium is configured to transmit third signal light, and the interface is configured to emit the third signal light;
the wavelength division multiplexer is configured to: receive the third signal light, perform wavelength division processing on the third signal light, and emit fourth signal light of a first wavelength in the third signal light; and
the optical receiver is configured to: receive the fourth signal light, and convert the fourth signal light into an electrical signal.

7. The optical module according to claim 6, wherein the wavelength division multiplexer emits the fourth signal light in a third direction, and any two of the first direction, the second direction, and the third direction are not parallel.

8. The optical module according to claim 6 or 7, wherein the optical receiver is in a dual-receiver form.

9. The optical module according to any one of claims 6 to 8, further comprising a housing, wherein the housing is a polyhedron comprising a plurality of planes, and the first optical transmitter, the second optical transmitter, and the optical receiver are respectively located on different planes of the plurality of planes.

10. The optical module according to claim 9, wherein the housing is a cube or a cuboid.

11. An optical communication device, comprising N boards, wherein a board of the N boards comprises at least one optical module according to any one of claims 1 to 10.
